# EUROPEAN PATENT SPECIFICATION

(11) **EP 3 001 266 B1**
(45) Date of publication and mention of the grant of the patent: **08.01.2020**
(21) Application number: 15183114.6
(22) Date of filing: 31.08.2015
(51) Int. Cl.: G05B 19/418, G05B 17/02, G05B 23/02

(54) **METHOD AND SYSTEM FOR PROVIDING DATA ANALYTICS RESULTS**
VERFAHREN UND SYSTEM ZUR BEREITSTELLUNG VON DATENANALYSEERGEBNISSEN
PROCÉDÉ ET SYSTÈME POUR FOURNIR DES RÉSULTATS D'ANALYSE DE DONNÉES

(30) Priority: 25.09.2014 EP 14186368
(43) Date of publication of application: 30.03.2016
(73) Proprietor: Siemens Aktiengesellschaft, 80333 München (DE); VDEh-Betriebsforschungsinstitut GmbH, 40237 Düsseldorf (DE)
(72) Inventor: Ebel, Dr. Alexander, 40789 Monheim am Rhein (DE); Zillner, Dr. Sonja, 80802 München (DE); Schneider, Martin, 81739 München (DE)
(74) Representative: Maier, Daniel Oliver

(56) References cited:
- EP-A1- 2 605 161
- WO-A1-2008/151701
- DE-A1-102010 043 651

## Description

The invention relates to a method and system for providing data analytics results for a process performed in an industrial plant, in particular in an industrial steel plant.

Industrial production of goods or intermediate products is performed in a manufacturing process based on a sequence of process steps. At each process step, the properties of the respective intermediate product are modified until the product reaches the required characteristic. The nature of such a manufacturing process is often complex and requires a precise process control. This is especially true for process-oriented industries like the steel industry.

In order to provide a precise control it is necessary to perform at each process step of the manufacturing process within the industrial plant a continuous observation of main quality factors. However, due to the complexity of the process steps errors occur regularly during the production which leads to losses and therefore higher costs of the respective end product. The reasons for the occurred errors are often related to the concatenation of slight deviations in the production conditions along the whole process chain or are caused by not reliable measurements. The impact of such disturbances on data is often highly non-linear and multivariate, i.e. several factors affect the process at the same time. For this reasons, they are difficult to detect by human operators or by standard statistical analysis.

Consequently, data analytic approaches have been applied. Data analytics describe the ability to analyze huge amounts of process data in order to extract the dependencies between different variables allowing also the identification of multivariate disturbances. A requisite for the application of data analytic techniques is the availability of process data being assigned to particular products along all process steps of the process chain. Therefore, data analytic approaches require the representation of the complete history of the manufactured product. As of today, the data acquisition of the process data is typically done separately for each process step and relies on different measurement intervals and different measurement precision. For example, within a steel plant during a secondary metallurgy process step, the process data, such as chemical analysis of a charge, is measured only once and directly assigned to the respective intermediate product melt. However, within further process steps such as hot rolling, measurements like the rolling thickness are measured continuously and the values are assigned to a position on the intermediate product hot strip. If one wants to perform a data analytics application that aims to find out how the number of defects on each part of the end product coil of predetermined length such as 100m relates to the rolling thickness and chemical analysis, it is necessary to collect all this process data and map it to the target parameter, in this case the number of defects at each 100m part of the end product coil. For being able to do so, the different information types, such as piece-based information (here chemical analysis) or the length-based information (here rolling thickness), have to be transferred and have to be, if necessary, aggregated in order to be able to assign the data to the respective target parameter. Moreover, it is necessary to incorporate that the products may consist of different parts of intermediate products. For example, it is possible that a hot strip is produced based on two different slabs. Moreover, it can happen that the product direction is changed during the production process. This again requires a rededication of data values and/or data measurements. The change of product direction can for example happen, if a coil box is used during the hot rolling process and causes that the start and the end of a hot strip are interchanged.

Any data analytics application needs to be informed about such different transformations of the intermediate products in order to provide a correct data basis for the analytical task. As of today, the required pre-processing of data sources is a very cumbersome and time-consuming task. In a conventional data analytics application, the pre-processing of the data sources is mostly done manually by experts or based on special software algorithms which implement the transformations explicitly. In addition, the mapping of data sets is documented in non-standardized data formats being developed for just this one envisioned data analytics application. Therefore, the conventional established routines of realizing data analytics applications in the industrial production domain hinder the efficient reuse of pre-processed data sources as well as hinder the seamless integration of pre-processed data sources within another and possibly more complex scenario. DE 10 2010 043651 A1 discloses a plant monitoring system comprising a processing unit designed to semantically enrich the system monitored data according to a predetermined ontology and output the processed data.

Accordingly, there is a need to provide a method and system for providing data analytics results for a process performed in an industrial plant to enable a seamless integration and reuse of pre-processed data analytics results within other and possibly more complex data analytics tasks.

The invention provides according to a first aspect a method for providing data analytics results for a process performed in an industrial plant, the method comprising the features of claim 1.

In a possible embodiment of the method according to the first aspect of the present invention, the semantic knowledge models are instantiated for a particular industrial plant and/or a process performed therein.

In a still further possible embodiment of the method according to the first aspect of the present invention, the data analytics results are stored in a data analytics results repository and/or are returned to a requesting analytics application.

In a still further possible embodiment of the method according to the first aspect of the present invention, the semantic process model comprises a set of possible process steps with each comprising a generic transformation model describing a set of possible production process steps with each comprising a generic transformation model describing a set of possible transformation process steps, and
a plant-specific transformation path model describing the set of transformation paths with a sequence of transformation process steps that can be executed by a particular industrial plant,
wherein each instance of a plant-specific transformation path model provides a set of measurement process data of product instances produced by the respective process step.

In a further possible embodiment of the method according to the first aspect of the present invention, the semantic plant model comprises
a plant structure model capturing information regarding the structure, components and interfaces of the industrial plant, a plant measurement model capturing process data regarding measurements of process steps performed within the industrial plant, and
a plant data storage model indicating storage locations and/or data formats of process data provided by processes performed within the industrial plant.

In a still further possible embodiment of the method according to the first aspect of the present invention, the semantic plant model further comprises a product model indicating product data of intermediate and/or final products produced by process steps of processes performed within an industrial plant.

In a still further possible embodiment of the method according to the first aspect of the present invention, the semantic plant model further comprises an order model indicating order data related to ordered intermediate and/or final products produced by process steps of processes performed within an industrial plant.

In a still further possible embodiment of the method according to the first aspect of the present invention, the accessed process data provided by the inferred data sources of the industrial plant are pre-processed before executing the data analytics application.

The invention further provides according to a second aspect a system for providing data analytics results for a process performed in an industrial plant comprising the features of claim 9.

In a still further possible embodiment of the system according to the second aspect of the present invention, the data analytics results are stored in a data analytics results repository of the system and/or are returned to a requesting analytics application.

In a still further possible embodiment of the system according to the second aspect of the present invention, the semantic process model comprises a set of possible production process steps with each comprising a generic transformation model describing a set of possible transformation process steps, and
a plant-specific transformation path model describing the set of transformation paths with a sequence of transformation process steps that can be executed by a particular industrial plant.
In a further possible embodiment of the system according to the second aspect of the present invention, the semantic plant model comprises
a plant structure model capturing information regarding the structure, components and interfaces of the industrial plant, a plant measurement model capturing process data regarding measurements of process steps of a process performed within the industrial plant, and
a plant data storage model indicating storage locations and/or data formats of process data.
In a still further possible embodiment of the system according to the second aspect of the present invention, the semantic plant model further comprises
a product model indicating production data of intermediate and/or final products produced by process steps of a process performed within an industrial plant, and
an order model indicating order data related to ordered intermediate and/or final products produced by process steps of a process performed within an industrial plant.

The invention further provides according to a third aspect the use of the method according to the first aspect in an industrial plant, as defined in claim 14.

According to the third aspect, the invention provides an industrial plant comprising a central or distributed control unit which is configured to generate control signals depending on data analytics results provided by a method for providing data analytics results according to the first aspect of the present invention for a process performed in the industrial plant,
wherein the generated control signals control process steps of processes performed by components of the industrial plant.

In a possible embodiment of the industrial plant according to the third aspect of the invention, the industrial plant is a steel plant adapted to produce steel products.

In the following, possible embodiments of different aspects of the present invention are described with reference to the enclosed figures in more detail.
- Fig. 1: shows a block diagram of an exemplary embodiment of a system for providing data analytics results according to an aspect of the present invention;
- Fig. 2: shows a flowchart of an exemplary embodiment of a method for providing data analytics results for a process performed in an industrial plant according to a further aspect of the present invention;
- Fig. 3: shows a schematic diagram for illustrating a product history of a product manufactured in an industrial steel plant for illustrating a use case of the method and system according to the present invention;
- Fig. 4: shows a schematic diagram of a data mapping which can be performed in an industrial steel plant.

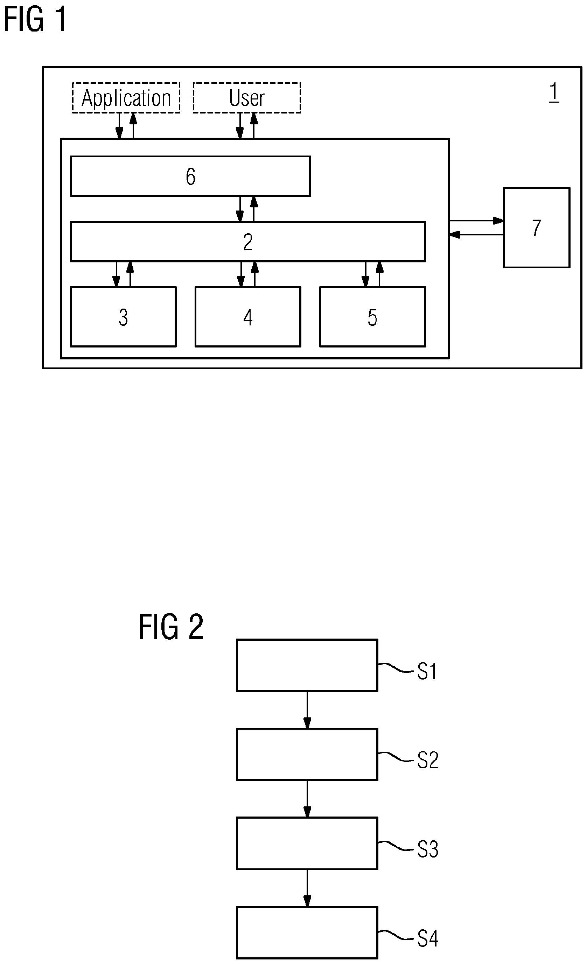

Fig. 1 shows an exemplary embodiment of a system 1 for providing data analytics results for a process performed in an industrial plant according to an aspect of the present invention.

The system 1 comprises a knowledge model repository 2 as illustrated in Fig. 1. The knowledge model repository 2 is configured to store semantic knowledge models. The knowledge models stored in the knowledge model repository 2 of the system 1 comprise at least one semantic plant model of an industrial plant such as a steel plant and at least one semantic process model of a process performed within the industrial plant. The semantic plant model of the industrial plant describes semantically a configuration of the respective industrial plant and storage locations of process data provided by data sources of the industrial plant when performing at least one process therein. The semantic plant model describes the structural aspects of the industrial plant and comprises information about measurements and storage locations on a high-level semantic (schema-level). Further, the industrial plant model encompasses any relations that map the high-level concepts onto concrete objects/items in the physical plant installation of the industrial plant (semantic annotation). In a possible embodiment, the industrial plant model is initially instantiated, wherein a generation of semantic annotation is accomplished.

The knowledge model repository 2 of the system 1 further comprises at least one semantic process model of a process which describes semantically the respective process steps of the process performed within the respective industrial plant. The semantic process model describes semantically a sequence of a production process on a generic level. Further, it covers the plant-specific realization of the production processes. Each implementation of a production process can consist of several product states which again are characterized by a sequence of transformations that need to be accomplished in order to attain the subsequent product state.

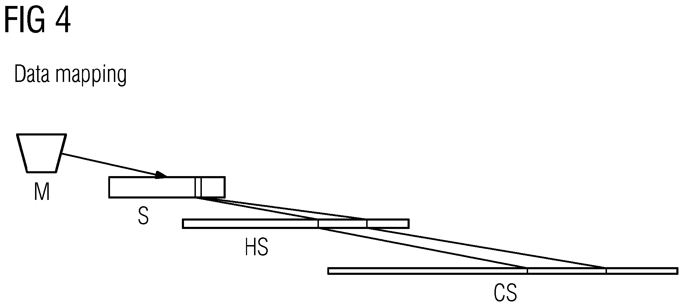

For instance, in a steel production domain or steel plant, the high-level process steps can consist of four high-level states, i.e. melt M, slab S, hot strip HS and cold strip CS, as also illustrated in the data mapping schematic diagram of Fig. 4. In the manufacturing process chain of an industrial steel plant, possible intermediate products sum as scrap are heated in a furnace to provide melt as a further intermediate product. From the melt M, a slab S is produced in a continuous caster. From the slab S, a hot strip HS is produced in a hot strip mill of the steel plant. In a cold strip mill, a cold strip CS is derived from the hot strip HS. The process chain which performs the process steps comprises different components such as a furnace, a ladle, a continuous caster, a hot strip mill and a cold strip mill. At each stage of the production chain, different operations are performed. At an electrical furnace of the industrial steel plant, scrap is added into an electrical furnace. Accordingly, at this operation stage, operations such as scrap addition, power-on and/or power-off are performed. For each stage, process data is provided. For instance, at the electrical furnace of the steel plant, process data such as scrap composition, energy consumption or off-gas composition is provided. At the stage of the next intermediate product melt M, operations comprise for example reheating, cooling, alloying and/or flushing. The corresponding process data comprise for instance alloying elements or temperature. At the stage of the intermediate product slab, operations or process steps comprise for instance grinding, welding, turning, cutting and storing. Corresponding process data comprise for instance casting temperature, casting progress, used casting powder or bath level. At the stage of the intermediate product hot strip HS, the performed process steps or operations comprise for instance temperature treatment, turning and cutting. The corresponding process data comprises for example temperature profile, thickness profile, width profile or rolling pressure. At the stage of the intermediate product cold strip CS, the operations or process steps comprise temperature treatment, turning and cutting performed at the cold strip mill. Corresponding process data comprise for instance temperature profile, thickness profile, width profile and rolling pressure.

The semantic process model stored in the knowledge model repository 2 of the system 1 comprises a set of possible production process steps with each comprising a generic transformation model describing a set of possible transformation process steps. The semantic process model further comprises a plant-specific transformation path model describing the set of transformation paths with a sequence of transformation process steps that can be executed by a particular industrial plant such as a steel plant. Each instance of a plant-specific transformation path model provides a set of measurement process data of product instances produced by the respective process step. The generic transformation model describes a set of all transformations or process steps, i.e. a plant-independent space of all possibilities. The plant-specific transformation path model describes a set of all transformation paths that can be executed at a particular industrial plant, i.e. a plant-specific space of possibilities. Thus, each of the described transformation path represents a sequence of transformations that are compliant to the underlying design of the specific industrial plant as well as accounts for any dependencies and interrelations between the transformations. Each transformation can be characterized by a set of measurements of the product instances that are produced in this particular transformation.

The semantic plant model also stored in the knowledge model repository 2 of the system 1 can comprise in a possible embodiment a plant structure model, a plant measurement model and/or a plant data storage model. The plant structure model comprises information or data regarding the structure, components and interfaces of the industrial plant. The plant structure model captures information on structural aspects of the industrial plant by describing the hardware components, roles and interfaces. In a possible embodiment, one can identify different roles of domain experts in the manufacturing domain. For instance, three different expert roles can comprise knowledge engineers, suppliers and plant engineers.

The plant measurement model comprises process data regarding measurements of process steps performed within the industrial plant. For instance, the measurement model can capture information regarding relevant measurements of a steel production process by describing measurements, roles and locations.

The plant data storage model indicates storage locations and/or data formats of process data provided by processes performed within the industrial plant. The plant data storage model describes how measurements are stored and how the data can be accessed. In a possible embodiment, the semantic plant model can further comprise a product model and/or an order model. The product model indicates product data of intermediate and/or final products produced by process steps of processes performed within the industrial plant. Accordingly, the product model describes product-related information. The product model can for instance describe the product-related information by listing relevant attributes captured within the life cycle of the respective product.

The order model indicates order data related to ordered intermediate and/or final products produced by the process steps of processes performed within the industrial plant. The order model can describe how technical and other order information is handled and where this information is stored.

As can be seen in Fig. 1, the knowledge model repository 2 of the system 1 can exchange data with other databases or repositories. In the embodiment shown in Fig. 1, the knowledge model repository 2 can exchange data with a plant data repository 3, a data analytics repository 4 and a data analytics result repository 5. The plant data repository 3 can comprise all data sources produced and stored in the context of the respective production process. For instance, the plant data repository 3 can collect any historical information or data about the accomplished production processes, i.e. all accomplished transformations. The data sources can be distributed along the process production chain.

The data analytics algorithm repository 4 can store a set of data analytics applications which can be stored together with their semantic description in a dedicated data analytics algorithm storage location.

Further, the data analytics result repository 5 forms the dedicated storage location for storing all accomplished data analytics results with their dedicated semantic description specifying how the data analytics results have been generated (input data source and data analytics algorithm).

In a possible embodiment, the knowledge model repository 2 can comprise an analytics results model that can be used to describe the analytics results by providing standardized labels for input data sources, specified measurements and parameter, type of analytics application and the corresponding storage location.

The system 1 further comprises in the illustrated embodiment an analytics composer 6 which comprises a processing unit. The analytics composer 6 can access for a given instantiated scenario model description the corresponding required input data sources from the plant data repository 3 as well as the needed analytics application from the data analytics algorithm storage location in the data analytics algorithm repository 4. A selection unit is adapted to select at least one analytics application which describes semantically at least one process step and at least one parameter required for accomplishing an analytics task. The processing unit of the analytics composer 6 is adapted to process the selected analytics application and the selected instantiated semantic knowledge models to infer at least one storage location of at least one data source of the industrial plant.

The system 1 as illustrated in Fig. 1 further comprises an execution engine 7. The execution engine 7 is adapted to execute the selected data analytics application using accessed process data provided by the inferred data sources of the industrial plant to generate the data analytics results. The execution engine 7 runs the selected as well as customized (by specifying the parameter values) data analytics algorithms on the selected or specified input data sources to generate the expected analytics results. Besides generating the analytics results, the execution engine 7 can compile a protocol that describes the input data and analytics application on a semantic level.

Fig. 2 shows a flowchart of an exemplary embodiment of a method for providing data analytics results for a process performed in an industrial plant such as an industrial steel plant. In a first step S1, semantic knowledge models are provided in a knowledge model repository such as the knowledge model repository 2 illustrated in Fig. 1. The semantic knowledge models comprise at least one semantic plant model of the industrial plant and at least one semantic process model of a process which describes semantically the respective production and transformation process steps performed within the industrial plant. The semantic plant model of the industrial plant describes semantically a configuration of the respective industrial plant as well as storage locations of process data provided by data sources of the industrial plant when performing at least one process therein. In a possible embodiment, all relevant data sources of the plant data repository 3 are semantically annotated with semantic labels of the knowledge models. In particular, the semantic plant model can be initialized with the dedicated references aligning the high-level description of the plant knowledge model with the concrete storage location of the measurements generated during the production process and stored in the plant data repository 3. These annotations can be determined automatically as well as by human interaction.

The semantic process model can also be initialized. According to the structure or design of the industrial plant and the respective transactions, the process model can be initialized. A data analytics result model can be informed about the type of data sources available in the industrial plant as well as about the type of scenarios that can be requested within the particular industrial plant in order to be able to compile semantic description for the data analytics results.

In a further step S2, at least one analytics application which describes semantically at least one process step and at least one parameter required for accomplishing an analytics task is selected. The selection can be accomplished in different ways. In a possible embodiment, an external application performs the selection according to a particular state of the applications. In an alternative embodiment, a user selects the analytics application manually according to the working task to be accomplished.

In a further step S3, the selected analytics application and selected instantiated semantic knowledge models are processed by a processing unit, for instance by a processing unit of the analytics composer 6, to infer at least one storage location of at least one data source of the industrial plant. By aligning and processing the data analytics model and the industrial plant model, the processing unit of the analytics composer 6 is able to infer which data sources and/or data entries are necessary for the data analytics tasks to be accomplished. Further, the processing unit of the analytics composer 6 can find out how to physically access the required data sources and/or data entries. The industrial plant model describes on a high-level manner where the needed data sources are stored. Further, the instantiating of the industrial plant model informs the processing unit at which location, e.g. in which database, the needed data item can be accessed for the particular industrial plant. The processing unit accesses the needed input data sources and sends the corresponding information to the execution engine 7.

In a further step S4, the selected data analytics applications are executed by the execution engine 7 using accessed process data provided by the inferred data sources of the industrial plant to generate the data analytics results. The information specified in the data analytics model informs the processing unit which data analytics applications need to be accessed as well as how to prepare those applications by specifying parameters. The processing unit of the analytics composer 6 sends the customized data analytics application to the execution engine 7. The execution engine 7 then starts the selected data analytics application with the provided input data sources.

The data analytics results generated by the execution engine 7 can be used in different ways. The data analytics results can be returned to the requesting application. Further, the data analytics results can be stored within the data analytics results repository 5. This ensures that the analytics results can be reused. Thus, the data analytics results get enhanced by its semantic description encompassing information of its triggering data analytics model.

The method and system according to the present invention rely on semantic description in order to establish a basis for the seamless reuse of pre-processed data sources within other data analytics challenges or tasks. The method and system according to the present invention use a semantic model on various levels. This includes a semantic model covering a generic set of analytics tasks, i.e. data analytics applications that can be accomplished within the production process.

The method and system according to the present invention provide semantic models on various levels in order to enable the seamless integration and reuse of pre-processed data analytics results with other possibly more complex data analytics tasks. This is accomplished by defining, initiating and aligning of semantic models on various levels. The method and system rely on a semantic description of an industrial plant model that semantically describes how to access the data provided by the respective industrial plant. Further, the method and system rely on a semantic description of a process model that semantically describes the high-level production process as well as the concrete production process implementation within the industrial plant. Further, the method and system according to the present invention rely on a semantic description of the data analytics model that semantically describes the analytics task envisioned and what type of data sources and type of algorithm are required to accomplish the respective task.

By aligning the different knowledge models, data from various domains can be integrated and pre-processed data sources can be reused within other contexts.

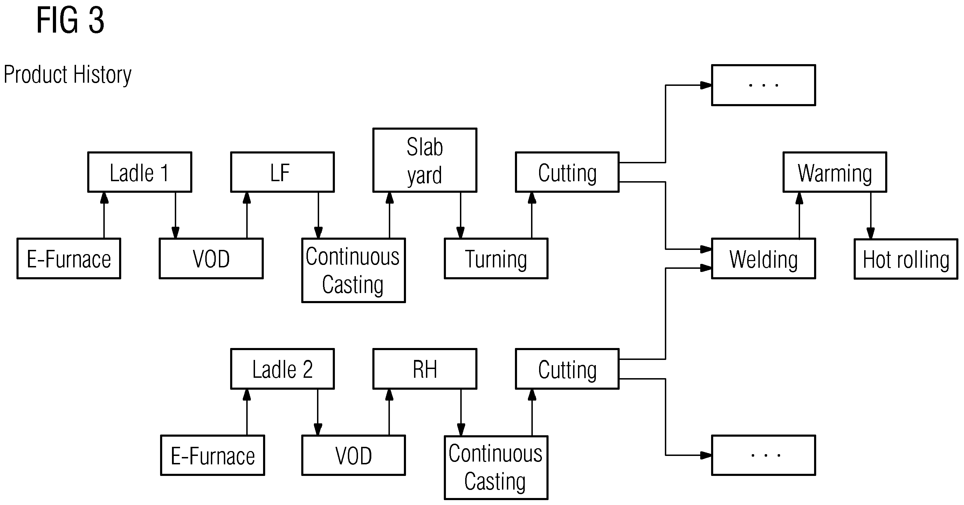

The method and system according to the present invention can be used for any industrial plant comprising components for performing an industrial production process. The industrial plant can comprise a central or distributed control unit which is configured to generate control signals depending on the data analytics results provided by the method according to the present invention as illustrated for example in Fig. 2. The generated control signals can control process steps of processes performed by components of the industrial plant. The industrial plant is for instance a steel plant adapted to produce steel products as illustrated schematically in Figs. 3, 4. The use of semantic modelling allows to manage vast amounts of different kinds of information and data and knowledge in a very precise and standardized way. The semantic model provides a vocabulary for defining the structure of the industrial plant, the underlying processes and intermediate or final products in a formal manner. For each industrial plant, a dedicated instantiating of the structure and process model describes a specific plant configuration.

## Claims

1. A method for providing data analytics results for a process performed in an industrial plant, said method comprising:
(a) providing (SI) semantic knowledge models stored in a knowledge model repository (2),
said semantic knowledge models comprising
- at least one semantic plant model of an industrial plant which describes semantically a configuration of the respective industrial plant and indicates storage locations of process data provided by data sources of the industrial plant when performing at least one process therein,
- at least one semantic process model of a process which describes semantically a sequence of the respective production steps and a plant-specific realization of the production steps consisting of several product states **characterized by** a sequence of transformation process steps performed within an industrial plant needed to attain a subsequent product state;
(b) selecting (S2) at least one analytics application which describes semantically at least one process step and at least one parameter required for accomplishing an analytics task, the analytics application customized by the respective parameter;
(c) processing (S3) the selected analytics application and selected instantiated semantic knowledge models to infer at least one storage location of at least one data source of the industrial plant;
(d) executing (S4) the selected data analytics application by an execution engine (7) using accessed process data provided by the inferred data sources of the industrial plant to generate the data analytics results.

2. The method according to claim 1, wherein semantic knowledge models are instantiated for a particular industrial plant and/or a process performed therein.

3. The method according to claim 1 or 2, wherein the data analytics results are stored in a data analytics results repository (5) and/or are returned to a requesting analytics application.

4. The method according to one of the preceding claims 1 to 3, wherein the semantic process model comprises a set of possible production process steps with each comprising a generic transformation model describing a set of possible transformation process steps, and a plant-specific transformation path model describing the set of transformation paths with a sequence of transformation process steps that can be executed by a particular industrial plant, wherein each instance of a plant-specific transformation path model provides a set of measurement process data of product instances produced by the respective process step.

5. The method according to one of the preceding claims 1 to 3, wherein the semantic plant model comprises a plant structure model capturing information regarding the structure, components and interfaces of the industrial plant,
a plant measurement model capturing process data regarding measurements of process steps performed within the industrial plant, and
a plant data storage model indicating storage locations and/or data formats of process data provided by processes performed within the industrial plant.

6. The method according to claim 5, wherein the semantic plant model further comprises
a product model indicating product data of intermediate and/or final products produced by process steps of processes performed within an industrial plant.

7. The method according to claim 5 or 6, wherein the semantic plant model further comprises an order model indicating order data related to ordered intermediate and/or final products produced by process steps of processes performed within an industrial plant.

8. The method according to one of the preceding claims 1 to 7, wherein the accessed process data provided by the inferred data sources of the industrial plant are preprocessed before executing the data analytics application.

9. A system for providing data analytics results for a process performed in an industrial plant,
said system (1) comprising:
(a) a knowledge model repository (2) configured to store semantic knowledge models,
said semantic knowledge models comprising
- at least one semantic plant model of an industrial plant which describes semantically a configuration of the respective industrial plant and indicates storage locations of process data provided by data sources of the industrial plant when performing at least one process therein,
- at least one semantic process model of a process which describes semantically a sequence of the respective production steps and a plant-specific realization of the production steps consisting of several product states **characterized by** a sequence of transformation process steps performed within an industrial plant needed to attain a subsequent product state;
(b) a selection unit adapted to select at least one analytics application which describes semantically at least one process step and at least one parameter required for accomplishing an analytics task, the analytics application customized by the respective parameter;
(c) a processing unit (6) adapted to process the selected analytics application and selected instantiated semantic knowledge models to infer at least one storage location of at least one data source of the industrial plant, and
(d) an execution engine (7) adapted to execute the selected data analytics application using accessed process data provided by the inferred data sources of the industrial plant to generate the data analytics results.

10. The system according to claim 9, wherein the data analytics results are stored in a data analytics results repository (5) of the system (1) and/or are returned to a requesting analytics application.

11. The system according to claim 9 or 10, wherein the semantic process model comprises a set of possible production process steps with each comprising a generic transformation model describing a set of possible transformation process steps, and
a plant-specific transformation path model describing the set of transformation paths with a sequence of transformation process steps that can be executed by a particular industrial plant.

12. The system according to one of the preceding claims 9 to 11, wherein the semantic plant model comprises
a plant structure model capturing information regarding the structure, components and interfaces of the industrial plant,
a plant measurement model capturing process data regarding measurements of process steps of a process performed within the industrial plant, and
a plant data storage model indicating storage locations and/or data formats of process data.

13. The system according to claim 12, wherein the semantic plant model further comprises
a product model indicating product data of intermediate and/or final products produced by process steps of a process performed within an industrial plant, and
an order model indicating order data related to ordered intermediate and/or final products produced by process steps of a process performed within an industrial plant.

14. Use of the method according to one of the preceding claims 1 to 8 in an industrial plant comprising a central or distributed control unit which is configured to generate control signals depending on data analytics results provided by said method, wherein the generated control signals control process steps of processes performed by components of the industrial plant.

15. Use of the method according to one of the preceding claims 1 to 8 in an industrial plant comprising a central or distributed control unit which is configured to generate control signals depending on data analytics results provided by said method, wherein the generated control signals control process steps of processes performed by components of the industrial plant, and wherein the industrial plant is a steel plant adapted to produce steel products.

## Patentansprüche

1. Verfahren zur Bereitstellung von Datenanalyseergebnissen für einen in einer Industrieanlage durchgeführten Prozess, wobei das Verfahren umfasst:
(a) Bereitstellen (SI) semantischer Wissensmodelle, die in einem Wissensmodell-Repositorium (2) gespeichert sind,
wobei diese semantischen Wissensmodelle umfassen:
- wenigstens ein semantisches Anlagenmodell einer Industrieanlage, welches eine Konfiguration der jeweiligen Industrieanlage semantisch beschreibt und Speicherorte von Prozessdaten angibt, die von Datenquellen der Industrieanlage bereitgestellt werden, wenn wenigstens ein Prozess darin durchgeführt wird,
- wenigstens ein semantisches Prozessmodell eines Prozesses, welches eine Folge der jeweiligen Produktionsschritte und eine anlagenspezifische Realisierung der Produktionsschritte semantisch beschreibt, die aus verschiedenen Produktzuständen besteht, die durch eine Folge von innerhalb einer Industrieanlage durchgeführten Transformationsprozessschritten charakterisiert sind, die benötigt werden, um einen nachfolgenden Produktzustand zu erreichen;
(b) Auswählen (S2) wenigstens einer Analyseanwendung, welche wenigstens einen Prozessschritt und wenigstens einen Parameter, der zur Ausführung einer Analyseaufgabe erforderlich ist, semantisch beschreibt, wobei die Analyseanwendung durch den jeweiligen Parameter spezifisch angepasst wird;
(c) Verarbeiten (S3) der ausgewählten Analyseanwendung und ausgewählten instantiierten semantischen Wissensmodelle, um wenigstens einen Speicherort wenigstens einer Datenquelle der Industrieanlage abzuleiten;
(d) Ausführen (S4) der ausgewählten Datenanalyseanwendung durch eine Ausführungsmaschine (7) unter Verwendung abgerufener Prozessdaten, die von den abgeleiteten Datenquellen der Industrieanlage bereitgestellt werden, um die Datenanalyseergebnisse zu erzeugen.

2. Verfahren nach Anspruch 1, wobei semantische Wissensmodelle für eine bestimmte Industrieanlage und/oder einen darin durchgeführten Prozess instantiiert werden.

3. Verfahren nach Anspruch 1 oder 2, wobei die Datenanalyseergebnisse in einem Repositorium für Datenanalyseergebnisse (5) gespeichert werden und/oder an eine anfordernde Analyseanwendung zurückgegeben werden.

4. Verfahren nach einem der Ansprüche 1 bis 3, wobei das semantische Prozessmodell eine Menge von möglichen Produktionsprozessschritten umfasst, die jeweils umfassen: ein generisches Transformationsmodell, das eine Menge von möglichen Transformationsprozessschritten beschreibt, und ein anlagenspezifisches Transformationspfadmodell, das die Menge von Transformationspfaden mit einer Folge von Transformationsprozessschritten beschreibt, welche von einer bestimmten Industrieanlage ausgeführt werden können, wobei jede Instanz eines anlagenspezifischen Transformationspfadmodells eine Menge von Messprozessdaten von Produktinstanzen bereitstellt, die durch den jeweiligen Prozessschritt produziert werden.

5. Verfahren nach einem der Ansprüche 1 bis 3, wobei das semantische Anlagenmodell umfasst: ein Anlagenstrukturmodell, das Informationen in Bezug auf die Struktur, Komponenten und Schnittstellen der Industrieanlage erfasst,
ein Anlagenmessmodell, das Prozessdaten in Bezug auf Messungen von Prozessschritten, die innerhalb der Industrieanlage durchgeführt werden, erfasst, und
ein Anlagendatenspeichermodell, das Speicherorte und/oder Datenformate von Prozessdaten angibt, die durch innerhalb der Industrieanlage durchgeführte Prozesse bereitgestellt werden.

6. Verfahren nach Anspruch 5, wobei das semantische Anlagenmodell ferner umfasst:
ein Produktmodell, das Produktdaten von Zwischen- und/oder Endprodukten angibt, die durch Prozessschritte von innerhalb einer Industrieanlage durchgeführten Prozessen produziert werden.

7. Verfahren nach Anspruch 5 oder 6, wobei das semantische Anlagenmodell ferner ein Ordnungsmodell umfasst, das Ordnungsdaten angibt, die sich auf geordnete Zwischen- und/oder Endprodukte beziehen, die durch Prozessschritte von innerhalb einer Industrieanlage durchgeführten Prozessen produziert werden.

8. Verfahren nach einem der Ansprüche 1 bis 7, wobei die abgerufenen Prozessdaten, die von den abgeleiteten Datenquellen der Industrieanlage bereitgestellt werden, vorverarbeitet werden, bevor die Datenanalyseanwendung ausgeführt wird.

9. System zur Bereitstellung von Datenanalyseergebnissen für einen in einer Industrieanlage durchgeführten Prozess, wobei das System (1) umfasst:
(a) ein Wissensmodell-Repositorium (2), das dafür ausgelegt ist, semantische Wissensmodelle zu speichern,
wobei diese semantischen Wissensmodelle umfassen:
- wenigstens ein semantisches Anlagenmodell einer Industrieanlage, welches eine Konfiguration der jeweiligen Industrieanlage semantisch beschreibt und Speicherorte von Prozessdaten angibt, die von Datenquellen der Industrieanlage bereitgestellt werden, wenn wenigstens ein Prozess darin durchgeführt wird,
- wenigstens ein semantisches Prozessmodell eines Prozesses, welches eine Folge der jeweiligen Produktionsschritte und eine anlagenspezifische Realisierung der Produktionsschritte semantisch beschreibt, die aus verschiedenen Produktzuständen besteht, die durch eine Folge von innerhalb einer Industrieanlage durchgeführten Transformationsprozessschritten charakterisiert sind, die benötigt werden, um einen nachfolgenden Produktzustand zu erreichen;
(b) eine Auswahleinheit, die dafür ausgelegt ist, wenigstens eine Analyseanwendung auszuwählen, welche wenigstens einen Prozessschritt und wenigstens einen Parameter, der zur Ausführung einer Analyseaufgabe erforderlich ist, semantisch beschreibt, wobei die Analyseanwendung durch den jeweiligen Parameter spezifisch angepasst wird;
(c) eine Verarbeitungseinheit (6), die dafür ausgelegt ist, die ausgewählte Analyseanwendung und die ausgewählten instantiierten semantischen Wissensmodelle zu verarbeiten, um wenigstens einen Speicherort wenigstens einer Datenquelle der Industrieanlage abzuleiten; und
(d) eine Ausführungsmaschine (7), die dafür ausgelegt ist, die ausgewählte Datenanalyseanwendung unter Verwendung abgerufener Prozessdaten auszuführen, die von den abgeleiteten Datenquellen der Industrieanlage bereitgestellt werden, um die Datenanalyseergebnisse zu erzeugen.

10. System nach Anspruch 9, wobei die Datenanalyseergebnisse in einem Repositorium für Datenanalyseergebnisse (5) des Systems (1) gespeichert werden und/oder an eine anfordernde Analyseanwendung zurückgegeben werden.

11. System nach Anspruch 9 oder 10, wobei das semantische Prozessmodell eine Menge von möglichen Produktionsprozessschritten umfasst, die jeweils umfassen: ein generisches Transformationsmodell, das eine Menge von möglichen Transformationsprozessschritten beschreibt, und ein anlagenspezifisches Transformationspfadmodell, das die Menge von Transformationspfaden mit einer Folge von Transformationsprozessschritten beschreibt, welche von einer bestimmten Industrieanlage ausgeführt werden können.

12. System nach einem der vorhergehenden Ansprüche 9 bis 11, wobei das semantische Anlagenmodell umfasst:
ein Anlagenstrukturmodell, das Informationen in Bezug auf die Struktur, Komponenten und Schnittstellen der Industrieanlage erfasst,
ein Anlagenmessmodell, das Prozessdaten in Bezug auf Messungen von Prozessschritten eines Prozesses, der innerhalb der Industrieanlage durchgeführt wird, erfasst, und
ein Anlagendatenspeichermodell, das Speicherorte und/oder Datenformate von Prozessdaten angibt.

13. System nach Anspruch 12, wobei das semantische Anlagenmodell ferner umfasst:
ein Produktmodell, das Produktdaten von Zwischen- und/oder Endprodukten angibt, die durch Prozessschritte eines innerhalb einer Industrieanlage durchgeführten Prozesses produziert werden, und
ein Ordnungsmodell, das Ordnungsdaten angibt, die sich auf geordnete Zwischen- und/oder Endprodukte beziehen, die durch Prozessschritte eines innerhalb einer Industrieanlage durchgeführten Prozesses produziert werden.

14. Anwendung des Verfahrens nach einem der vorhergehenden Ansprüche 1 bis 8 in einer Industrieanlage, die eine zentrale oder verteilte Steuereinheit umfasst, welche dafür ausgelegt ist, Steuersignale zu erzeugen, die von durch das Verfahren bereitgestellten Datenanalyseergebnissen abhängen,
wobei die erzeugten Steuersignale Prozessschritte von Prozessen steuern, die von Komponenten der Industrieanlage durchgeführt werden.

15. Anwendung des Verfahrens nach einem der vorhergehenden Ansprüche 1 bis 8 in einer Industrieanlage, die eine zentrale oder verteilte Steuereinheit umfasst, welche dafür ausgelegt ist, Steuersignale zu erzeugen, die von durch das Verfahren bereitgestellten Datenanalyseergebnissen abhängen,
wobei die erzeugten Steuersignale Prozessschritte von Prozessen steuern, die von Komponenten der Industrieanlage durchgeführt werden, und wobei die Industrieanlage ein Stahlwerk ist, das dafür ausgelegt ist, Stahlprodukte zu produzieren.

## Revendications

1. Un procédé de fourniture de résultats d'analyses de données destinés à un procédé exécuté dans une usine industrielle, ledit procédé comprenant :
(a) la fourniture (S1) de modèles de connaissances sémantiques conservés en mémoire dans un référentiel de modèles de connaissances (2),
lesdits modèles de connaissances sémantiques comprenant
- au moins un modèle d'usine sémantique d'une usine industrielle qui décrit de manière sémantique une configuration de l'usine industrielle respective et indique des espaces mémoires de données de procédé fournies par des sources de données de l'usine industrielle lors de l'exécution d'au moins un procédé dans celle-ci,
- au moins un modèle de procédé sémantique d'un procédé qui décrit de manière sémantique une séquence des étapes de production respectives et une réalisation spécifique à une usine des étapes de production se composant de plusieurs états de produit **caractérisée par** une séquence d'étapes de procédé de transformation exécutées à l'intérieur d'une usine industrielle nécessaires pour atteindre un état de produit subséquent,
(b) la sélection (S2) d'au moins une application d'analyse qui décrit de manière sémantique au moins une étape de procédé et au moins un paramètre requis pour accomplir une tâche d'analyse, l'application d'analyse étant personnalisée par le paramètre respectif,
(c) le traitement (S3) de l'application d'analyse sélectionnée et de modèles de connaissances sémantiques instanciés sélectionnés de façon à inférer au moins un espace mémoire d'au moins une source de données de l'usine industrielle,
(d) l'exécution (S4) de l'application d'analyse de données sélectionnée par un moteur d'exécution (7) au moyen de données de procédé accédées fournies par les sources de données inférées de l'usine industrielle de façon à générer les résultats d'analyses de données.

2. Le procédé selon la revendication 1, dans lequel des modèles de connaissances sémantiques sont instanciés pour une usine industrielle particulière et/ou un procédé exécuté dans celle-ci.

3. Le procédé selon la revendication 1 ou 2, dans lequel les résultats d'analyses de données sont conservés en mémoire dans un référentiel de résultats d'analyses de données (5) et/ou sont renvoyés à une application d'analyse demandeuse.

4. Le procédé selon l'une quelconque des revendications précédentes 1 à 3, dans lequel le modèle de procédé sémantique comprend un ensemble d'étapes de procédé de production possibles, chacune d'elles comprenant un modèle de transformation générique décrivant un ensemble d'étapes de procédé de transformation possibles et un modèle de trajet de transformation spécifique à une usine décrivant l'ensemble de trajets de transformation avec une séquence d'étapes de procédé de transformation qui peuvent être exécutées par une usine industrielle particulière, chaque instance d'un modèle de trajet de transformation spécifique à une usine fournissant un ensemble de données de procédé de mesure d'instances de produit produites par l'étape de procédé respective.

5. Le procédé selon l'une quelconque des revendications précédentes 1 à 3, dans lequel le modèle d'usine sémantique comprend un modèle de structure d'usine qui capture des informations concernant la structure, les composants et les interfaces de l'usine industrielle,
un modèle de mesure d'usine qui capture des données de procédé concernant des mesures d'étapes de procédé exécutées à l'intérieur de l'usine industrielle, et
un modèle d'espace mémoire de données d'usine qui indique des espaces mémoires et/ou des formats de données de données de procédé fournies par des procédés exécutés à l'intérieur de l'usine industrielle.

6. Le procédé selon la revendication 5, dans lequel le modèle d'usine sémantique comprend en outre
un modèle de produit indiquant des données de produit de produits finaux et/ou intermédiaires produits par des étapes de procédé de procédés exécutés à l'intérieur d'une usine industrielle.

7. Le procédé selon la revendication 5 ou 6, dans lequel le modèle d'usine sémantique comprend en outre un modèle de commande indiquant des données de commande relatives à des produits finaux et/ou intermédiaires commandés produits par des étapes de procédé de procédés exécutés à l'intérieur d'une usine industrielle.

8. Le procédé selon l'une quelconque des revendications précédentes 1 à 7, dans lequel les données de procédé accédées fournies par les sources de données inférées de l'usine industrielle sont prétraitées avant l'exécution de l'application d'analyse de données.

9. Un système de fourniture de résultats d'analyses de données destinés à un procédé exécuté dans une usine industrielle, ledit système (1) comprenant :
(a) un référentiel de modèles de connaissances (2) configuré de façon à conserver en mémoire des modèles de connaissances sémantiques,
lesdits modèles de connaissances sémantiques comprenant
- au moins un modèle d'usine sémantique d'une usine industrielle qui décrit de manière sémantique une configuration de l'usine industrielle respective et indique des espaces mémoires de données de procédé fournies par des sources de données de l'usine industrielle lors de l'exécution d'au moins un procédé dans celle-ci,
- au moins un modèle de procédé sémantique d'un procédé qui décrit de manière sémantique une séquence des étapes de production respectives et une réalisation spécifique à une usine des étapes de production se composant de plusieurs états de produit **caractérisée par** une séquence d'étapes de procédé de transformation exécutées à l'intérieur d'une usine industrielle nécessaires pour atteindre un état de produit subséquent,
(b) une unité de sélection adaptée de façon à sélectionner au moins une application d'analyse qui décrit de manière sémantique au moins une étape de procédé et au moins un paramètre requis pour accomplir une tâche d'analyse, l'application d'analyse étant personnalisée par le paramètre respectif,
(c) une unité de traitement (6) adaptée de façon à traiter l'application d'analyse sélectionnée et les modèles de connaissances sémantiques instanciés sélectionnés de façon à inférer au moins un espace mémoire d'au moins une source de données de l'usine industrielle, et
(d) un moteur d'exécution (7) adapté de façon à exécuter l'application d'analyse de données sélectionnée au moyen de données de procédé accédées fournies par les sources de données inférées de l'usine industrielle de façon à générer les résultats d'analyses de données.

10. Le système selon la revendication 9, dans lequel les résultats d'analyses de données sont conservés en mémoire dans un référentiel de résultats d'analyses de données (5) du système (1) et/ou sont renvoyés à une application d'analyse demandeuse.

11. Le système selon la revendication 9 ou 10, dans lequel le modèle de procédé sémantique comprend un ensemble d'étapes de procédé de production possibles, chacune d'elles comprenant un modèle de transformation générique décrivant un ensemble d'étapes de procédé de transformation possibles, et
un modèle de trajet de transformation spécifique à une usine décrivant l'ensemble de trajets de transformation avec une séquence d'étapes de procédé de transformation qui peuvent être exécutées par une usine industrielle particulière.

12. Le système selon l'une quelconque des revendications précédentes 9 à 11, dans lequel le modèle d'usine sémantique comprend un modèle de structure d'usine qui capture des informations concernant la structure, les composants et les interfaces de l'usine industrielle,
un modèle de mesure d'usine qui capture des données de procédé concernant des mesures d'étapes de procédé d'un procédé exécuté à l'intérieur de l'usine industrielle, et un modèle d'espace mémoire de données d'usine indiquant des espaces mémoires et/ou des formats de données de données de procédé.

13. Le système selon la revendication 12, dans lequel le modèle d'usine sémantique comprend en outre
un modèle de produit indiquant des données de produit de produits finaux et/ou intermédiaires produits par des étapes de procédé d'un procédé exécuté à l'intérieur d'une usine industrielle, et
un modèle de commande indiquant des données de commande relatives à des produits finaux et/ou intermédiaires commandés produits par des étapes de procédé d'un procédé exécuté à l'intérieur d'une usine industrielle.

14. L'utilisation du procédé selon l'une quelconque des revendications précédentes 1 à 8 dans une usine industrielle comprenant une unité de commande centrale ou distribuée qui est configurée de façon à générer des signaux de commande en fonction de résultats d'analyses de données fournies par ledit procédé,
dans lequel les signaux de commande générés commandent des étapes de procédé de procédés exécutés par des composants de l'usine industrielle.

15. L'utilisation du procédé selon l'une quelconque des revendications précédentes 1 à 8 dans une usine industrielle comprenant une unité de commande centrale ou distribuée qui est configurée de façon à générer des signaux de commande en fonction de résultats d'analyses de données fournies par ledit procédé, les signaux de commande générés commandant des étapes de procédé de procédés exécutés par des composants de l'usine industrielle, et
l'usine industrielle étant une aciérie adaptée de façon à produire des produits en acier.
